# EUROPÄISCHE PATENTSCHRIFT

(11) **EP 0 483 613 B1**
(45) Veröffentlichungstag und Bekanntmachung des Hinweises auf die Patenterteilung: **15.02.1995**
(21) Anmeldenummer: 91117787.1
(22) Anmeldetag: 18.10.1991
(51) Int. Cl.: G01N 30/06

(54) **Verfahren und Vorrichtung zum qualitativen und/oder quantitativen Untersuchen von flüssigem Ausgangsmaterial**
Method and apparatus for the qualitative and/or quantitative monitoring of liquid raw materials
Procédé et dispositif d'analyse qualitative et/ou quantitative des matériaux de base liquides

(30) Priorität: 29.10.1990 DE 4034443
(43) Veröffentlichungstag der Anmeldung: 06.05.1992
(73) Patentinhaber: Gerstel, Eberhard, D-45473 Mülheim an der Ruhr (DE)
(72) Erfinder: Gerstel, Eberhard, D-45473 Mülheim an der Ruhr (DE)
(74) Vertreter: Sparing Röhl Henseler Patentanwälte

(56) Entgegenhaltungen:
- DE-A- 1 623 013
- US-A- 3 545 929
- PATENT ABSTRACTS OF JAPAN vol. 12, no. 34 (P-662)(2881)2. Februar 1988 & JP-A-62 187 250
- JOURNAL OF CHROMATOGRAPHY. Bd. 405, 1987, AMSTERDAM NL Seiten 87 - 98; P. WERKHOFF ET AL: 'Dynamic headspace gas chromatography: Concentration of volatile components after thermal desorption by intermediate cryofocusing in a cold trap'
- ANALYTICAL CHEMISTRY. Bd. 51, Nr. 13, November 1979, COLUMBUS US Seiten 2167 - 2172; S.L. FRIANT ET AL: 'Interactive effects of temperature, salt concentration, and pH on head space analysis for isolating volatile trace organics in aqueous environmental samples'
- ADVANCES IN INSTRUMENTATION AND CONTROL. Bd. 45, Nr. 1, 1990, RESEARCH TRIANGLE PARK, NC, US Seiten 527 - 535; G.L. COMBS ET AL: 'Design and performance of a sparger and process chromatograph for continuous monitoring of volatiles in water at the ppb level'
- PATENT ABSTRACTS OF JAPAN vol. 12, no. 8 (P-654)(2855)12. Januar 1988 & JP-A-62 169 051

## Beschreibung

Die Erfindung betrifft ein Verfahren zum qualitativen und/oder quantitativen Untersuchen von Ausgangsmaterial, bestehend aus einer flüssigen Phase, in der die zu untersuchenden Substanzen enthalten sind, wobei eine definierte Menge an Ausgangsmaterial in einen in vertikaler Richtung langgestreckten, engen Extraktorraum gefördert wird, wobei man in einer ersten Stufe ein Trägergas von unten durch das im Extraktorraum befindliche, flüssige Ausgangsmaterial perlen läßt und das mit den zu untersuchenden Substanzen beladene Trägergas in ein kühl- und heizbares Verdampferrohr führt, dessen Temperatur derart eingestellt ist, daß die zu untersuchenden Substanzen an einer darin befindlichen Phase festgehalten werden, während das Trägergas über eine vor einer gaschromatographischen Kapillarsäule stromabwärts vom Verdampferrohr abzweigende Abführleitung abgeführt wird, wonach in einer zweiten Stufe die im Verdampferrohr zurückgehaltenen Substanzen durch Erhitzen des Verdampferrohrs bei freigegebenem Zugang zur Kapillarsäule bzw. zu einem Analysator freigesetzt und mittels Trägergas in die Kapillarsäule bzw. den Analysator geführt werden, und eine Vorrichtung zum qualitativen und/oder quantitativen Untersuchen von Ausgangsmaterial, bestehend aus einer flüssigen Phase, in der die zu untersuchenden Substanzen enthalten sind, die von einem Trägergas aufgenommen und gegebenenfalls über eine gaschromatographische Kapillarsäule einem Analysator zugeführt werden, bei der eine Einrichtung zum Bereitstellen einer definierten Menge an Ausgangsmaterial, ein in vertikaler Richtung langgestreckter, enger an eine Trägergasquelle anschließbarer Extraktorraum mit einer mit seinem oberen Ende verbundenen Abführleitung für beladenes Trägergas, ein kühl- und heizbares Verdampferrohr, mit dem die Abführleitung und eine Spülgasleitung eintrittsseitig verbunden sind und ein Fraktionenvorverteiler vorgesehen sind, der Fraktionenvorverteiler mit dem Austrittsende des Verdampferrohrs und mit der Kapillarsäule bzw. dem Analysator verbunden, sowie mit einer verschließbaren Abführleitung für mit Lösungsmittel beladenem Trägergas versehen ist.

Beim Untersuchen von beispielsweise wässrigen Lösungen, etwa Trink-, Ab- oder Flußwasser, Wein, Bier o.dgl., auf das Vorhandensein von im allgemeinen in sehr geringer Konzentration vorhandenen Substanzen, etwa Schadstoffen, oder anderen Ausgangsmaterialien auf in geringer Konzentration darin befindliche Substanzen bereitet es Probleme, das gesamte Spektrum an vorhandenen Substanzen zu erfassen. Beim Wasser wird dies beispielsweise durch die Polarität des Wassers beeinträchtigt, die dazu führt, daß ein Teil von Substanzen nicht oder nur unvollständig erfaßbar ist. Wenn man durch Erhitzen aus der flüssigen Phase entfernte Substanzen zum Entfernen von mitgeführter flüssiger Phase rückkühlt, ergibt sich ein Stoffverlust, der das Untersuchungsergebnis entsprechend verfälscht.

Ein Verfahren und eine Vorrichtung der eingangs genannten Art sind aus US-A-3 545 929 bekannt, wonach zu untersuchendes, verdampftes Wasser in einem Trockner festgehalten, und das die zu untersuchende Substanz Kohlenmonoxid enthaltende Trägergas wird ohne den Wassergehalt in ein gekühltes Verdampferrohr geführt. Kohlenmonoxid wird aus dem getrockneten Trägergas im gekühlten Verdampferrohr angereichert, in einem nächsten Schritt durch Aufheizen des Verdampferrohrs und Umschalten entsprechender als Fraktionenverteiler dienender Ventile mit Wasserstoff zur Reaktion gebracht und anschließend einem Detektor zugeführt. Beim Trocknen geht mindestens ein Teil der extrahierten Substanzen durch Abführen des beim Trocknen anfallenden Wassers verloren und kann dementsprechend nicht oder nur zum Teil analytisch erfaßt werden. Wenn neben Kohlenmonoxid noch andere Substanzen bestimmt werden sollten, würde dadurch das Spektrum untersuchbarer Substanzen eingeschränkt. Die Ventile weisen konstruktionsbedingt Toträume auf, die die Meßergebnisse verfälschen.

Aus Patent Abstracts of Japan Vol. 12, No. 34 (P-662)(2881) 2. Februar 1988, ist ferner ein Verfahren bekannt, bei dem das Ausgangsmaterial in ein einmachglasähnliches Extraktorgefäß gefüllt wird. In einem ersten Schritt wird es mittels von unten in den Extraktorraum eingeführtem Trägergas extrahiert und das mit den flüchtigen Komponenten des Ausgangsmaterials beladene Trägergas durch eine beheizbare Anreicherungseinrichtung und danach über ein Ventil abgeführt. In einem zweiten Schritt werden die angereicherten Komponenten und das Trägergas in einem tiefgekühlten Kapillarrohr einer Probenaufgabeeinrichtung gefangen (Cryofokussierung). In einem dritten Schritt wird die Probe auf eine gaschromatographische Kapillarsäule mit sich anschließendem Analysator gegeben. Hier sind somit drei Arbeitszyklen durchzuführen, die jeweils eine entsprechend lange Zeit benötigen, wobei zudem ein entsprechendes Ventil zu schalten ist. Der Zeitfaktor spielt aber z.B. bei der Überwachung von Abwässern der chemischen Industrie eine wesentliche Rolle, d.h. daß z.B. alle 15 min eine Messung vorgenommen werden muß, um festzustellen, ob zulässige Konzentrationsschwellwerte überschritten werden oder nicht. Je mehr Zyklen notwendig sind, desto störanfälliger ist ein System, außerdem ist dieses System nicht automatisiert und wäre in dieser Beziehung auch problematisch.

Aufgabe der Erfindung ist es, ein Verfahren und eine Vorrichtung der eingangs genannten Art zu schaffen, die es ermöglichen, das Spektrum der zu untersuchenden Substanzen so vollständig wie möglich, d.h. möglichst verlustfrei analysieren zu können.

Diese Aufgabe wird dadurch gelöst, daß man in der ersten Stufe die im Extraktorraum verdampfte, flüssige Phase des Ausgangsmaterials mit in das Verdampferrohr, dessen Temperatur derart eingestellt ist, daß die mitgeführte verdampfte, flüssige Phase des Ausgangsmaterials zumindest überwiegend nicht festgehalten wird, führt und zumindest überwiegend zusammen mit dem Trägergas unter Blockierung des Zugangs zur Kapillarsäule bzw. zum Analysator mittels zusätzlicher Trägergaseinleitung stromabwärts von der abzweigenden Abführleitung abführt.

Weiter wird die Aufgabe vorrichtungsmäßig dadurch gelöst, daß die vom Extraktorraum ausgehende Abführleitung für beladenes Trägergas direkt mit dem Verdampferrohr verbunden ist und stromabwärts der verschließbaren Abführleitung eine Zuführleitung des Fraktionenvorverteilers für zusätzliches Trägergas zum pneumatischen Verschließen des Zugangs zur Kapillarsäule bzw. zum Analysator vorgesehen ist.

Weitere Ausgestaltungen der Erfindung sind der nachfolgenden Beschreibung und den abhängigen Ansprüchen zu entnehmen.

Die Erfindung wird nachstehend anhand der in den beigefügten Abbildungen dargestellten Ausführungsbeispiele näher erläutert.

Fig. 1 zeigt schematisiert eine Vorrichtung zum Untersuchen von flüssigem Ausgangsmaterial.

Fig. 2 zeigt ein Aufgabegefäß für eine Vorrichtung zum Untersuchen von flüssigem Ausgangsmaterial.

Fig. 3 zeigt schematisch eine weitere Ausführungsform einer Vorrichtung zum Untersuchen von flüssigem Ausgangsmaterial.

Fig. 4 zeigt ein Extraktorgefäß für die Vorrichtung von Fig. 3.

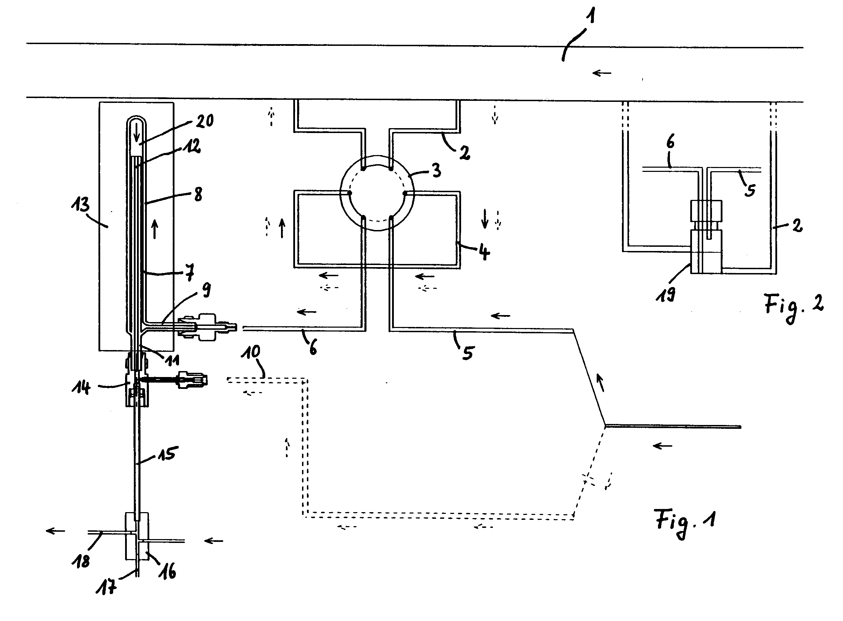

Gemäß Fig. 1 wird einem Hauptstrom 1, beispielsweise einer Trink- oder Abwasserleitung oder einem Fluß o.dgl., über einen Bypass 2 Flüssigkeit entnommen. Der Bypass 2 ist über ein Umschaltventil 3 mit einer Dosierschleife 4 verbunden, so daß im gestrichelt dargestellten Zustand die dem Hauptstrom 1 entnommene Flüssigkeit nach Durchlaufen des Bypasses 2 und der Dosierschleife 4 dem Hauptstrom 1 entsprechend den gestrichelten Pfeilen wieder zugeführt wird. Die Dosierschleife 4 ist daher mit Flüssigkeit in einer vorbestimmten Menge gefüllt, die ständig erneuert wird.

Mit dem Umschaltventil 3 ist ferner eine Trägergasleitung 5 sowie eine Zuführleitung 6 verbunden. Soll dem Hauptstrom 1 eine Probe entnommen werden, wird das Umschaltventil 3 derart umgeschaltet, daß die durchgezogen miteinander verbundenen Leitungen miteinander verbunden sind, d.h. der Bypass 2 ist unter Abkopplung der Dosierschleife 4 kurzgeschlossen, während ein Ende der Dosierschleife 4 an die Trägergasleitung 5 und das andere Ende an die Zuführleitung 6 gekoppelt ist. Das über die Trägergasleitung 5 zugeführte Trägergas drückt die in der Dosierschleife 4 befindliche Flüssigkeit aus dieser heraus und befördert sie über die Zuführleitung 6 in einen in vertikaler Richtung langgestreckten, engen Extraktorraum 7. Der Extraktorraum 7 befindet sich in einem Extraktorrohr 8, das mit einem unteren, zum Extraktorraum 7 führenden Einlaßstutzen 9 sowie mit einem mittig in dem Extraktorrohr 8 angeordneten, sich im wesentlichen über die Länge des Extraktorrohrs 8 erstreckenden und in einen nach unten wegführenden Auslaßstutzen 11 mündenden Abführrohr 12 versehen ist.

Der zwischen dem Abführrohr 12 und dem Extraktorrohr 8 befindliche Ringraum ist volumenmäßig größer als die Dosierschleife 4, so daß der Inhalt der letzteren von diesem Ringraum aufgenommen wird.

Nachströmendes Trägergas perlt durch die im Extraktorraum 7 befindliche Flüssigkeit und nimmt aus dieser zu untersuchende Substanzen sowie Lösungsmittel, etwa Wasser o.dgl., auf, um dann durch das Abführrohr 12 abgeführt zu werden.

Das Extraktorrohr 8 ist insbesondere über eine Heizung 13 gesteuert beheizbar, so daß sämtliche, im Ausgangsmaterial enthaltenen Substanzen - bei entsprechendem Verdampfen von Lösungsmittel - vom Trägergas auf- und mitgenommen werden können. Prinzipiell kann dies soweit getrieben werden, bis das gesamte Ausgangsmaterial verdampft ist. Auch kann eine bei Umgebungstemperatur feste Substanz die flüssige Phase bilden, die durch Beheizen des Extraktorrohrs 8 flüssig gehalten wird.

Der Auslaßstutzen 11 des Abführrohrs 12 ist über ein Kupplungsstück 14 mit einem Verdampferrohr 15 verbunden, das kühl- und beheizbar und beim Zuführen des beladenen Trägergases auf eine solche Temperatur eingestellt ist, daß sich die zu untersuchenden Substanzen im Verdampferrohr 15 beispielsweise über eine selektive Packung im Verdampferrohr 15 - z.B. durch polare Adhäsion o.dgl. - niederschlagen und festgehalten, d.h. angereichert werden, und zwar praktisch ohne Stoffverlust, während das unerwünschte Lösungsmittel mit dem Trägergasstrom zu einem Fraktionenvorverteiler 16, der insbesondere wie das in der EP-A- 0 292 612 beschriebene Verzweigungsstück ausgebildet sein kann, transportiert wird. Der Fraktionenvorverteiler 16 ist an eine gaschromatographische Kapillarsäule 17 und (oder wenn die zu untersuchenden Substanzen an sich bekannt sind, direkt an) einen Analysator (nicht dargestellt) angeschlossen. Wenn das Trägergas Lösungsmittel zum Fraktionenvorverteiler 16 transportiert, ist letzterer zur Kapillarsäule 17 hin verschlossen. Dieser Verschluß ist insbesondere pneumatisch durch Zuleitung von Trägergas zu einer Stelle stromabwärts einer Abzweigung zu einer Abführleitung verwirklicht, während das mit Lösungsmittel beladene Trägergas durch die Abführleitung 18 ausgeblendet wird.

Nachdem das Lösungsmittel entfernt ist, wird das Verdampferrohr 15 erhitzt und gleichzeitig über das Kupplungsstück 14 dem Verdampferrohr 15 Spülgas über eine Leitung 10 (die mit der Trägergasquelle verbunden sein kann, wenn Spül- und Trägergas gleich sind) zugeführt, während der Zugang zur Kapillarsäule 17 geöffnet wird, so daß die im Verdampferrohr 15 zurückgehaltenen Substanzen freigesetzt und mit dem Spülgas der Kapillarsäule 17 zwecks Trennung und Untersuchung in einem nachfolgenden Analysator zugeführt werden. Die Abführleitung 18 ist hierbei geschlossen.

Gleichzeitig mit der Zuführung des Spülgases wird das Umschaltventil 3 wieder in den gestrichelt dargestellten Zustand umgeschaltet, so daß die Dosierschleife 4 wieder über den Bypass 2 von Flüssigkeit aus dem Hauptstrom 1 durchflossen wird.

Um eventuell in dem Extraktorraum 7 verbliebenes Lösungsmittel nachher wieder zu entfernen, kann die Zuführleitung 6 mit einer nicht dargestellten, mit einem Ventil versehenen Abführleitung verbunden sein, so daß das über das Kupplungsstück 14 zugeführte Spülgas gleichzeitig auch die Restflüssigkeit aus dem Extratorraum 7 herausdrückt und diesen und die Zuführleitung 6 entleert.

Als Kupplungsstück 14 läßt sich beispielsweise ein Aufgabekopf nach der DE-A- 34 00 458 bzw. dem DE-U- 87 15 782 verwenden. Hiermit läßt sich ein einfaches Auswechseln des Extraktorrohrs 8 bewerkstelligen.

Anstelle der Dosierschleife 4 läßt sich auch ein Überlaufgefäß verwenden. Die definierte Menge an Ausgangsmaterial kann aber auch dadurch eingestellt werden, daß der Extraktorraum 7 mit einem vor- und einem nachgeschalteten Magnetventil versehen ist, wobei das eintrittsseitige Magnetventil vom Trägergas umgehbar ist. Außerdem kann ein mit Flüssigkeit mit definiertem Volumen versehener Behälter 19 vorgesehen sein, aus dem das Trägergas die Flüssigkeit über die unmittelbar über dem Behälterboden beginnende Zuführleitung 6 in den Extraktorraum 7 drückt (Fig. 2).

Der ringförmige Extraktorraum 7 ist zweckmäßigerweise so eng, daß sich ringförmige Trägergasblasen ausbilden, die in der im Extraktorraum 7 befindlichen Flüssigkeit hochsteigen, ohne die Flüssigkeit auszutragen. Der über dem Abführrohr 12 befindliche Kopfraum 20 des kopfseitig geschlossenen Extraktorrohrs 8 sollte klein gehalten werden.

Der Extraktorraum 7 braucht nicht ringförmig zu sein, das Extraktorrohr 8 kann auch durch eine Zwischenwand in den Extraktorraum 7 und die Abführleitung 12 bis auf den beide verbindenden Kopfraum 20 unterteilt sein. Das Extraktorrohr 8 kann auch U-förmig sein, wobei ein vertikaler Schenkel des Extraktorraum 7 und der andere das Abführrohr 12 bildet. In jedem Fall ist die Trägergaszufuhr so vorzunehmen, daß sich eine möglichst große Kontaktfläche zwischen Gas und Flüssigkeit ohne Flüssigkeitsaustrag ergibt.

Der Fraktionenvorverteiler 16 kann gegebenenfalls auch zum split/splitlosen Arbeiten verwendet werden, d.h. daß er zunächst über die geöffnete Abführleitung 18 Lösungsmittel überwiegend abführt und nur einen geringen Teil (beispielsweise im Verhältnis 1:100) auf die Kapillarsäule 17, um dann, wenn das zu untersuchende Probenmaterial ankommt, d.h. das Verdampferrohr 15 erhitzt wird, bei geschlossener Abführleitung 18 splitlos dieses der Kapillarsäule 17 zuzuführen. In diesem Fall erfolgt kein pneumatischer Verschluß der Kapillarsäule 17.

Das Extraktorrohr 8 kann auch als auswechselbarer Probenbehälter verwendet werden, wobei an seinem unteren Ende eine Injektionsnadel angebracht wird, die später beim Aufsetzen des Extraktorrohrs 8 auf das septumlose Kupplungsstück 14 in letzteres eingeführt wird. Am Ort der Probennahme kann etwa mittels einer Pipette eine vorbestimmte Menge an Probenflüssigkeit in das Extraktorrohr 8 eingefüllt werden. Hiermit wird dann das Extraktorrohr 8 - gegebenenfalls gekühlt - zum Analysenort transportiert. Wenn dieses leicht auswechselbare Extraktorrohr 8 auf das Kupplungsstück 14 aufgesetzt wird, führt der darin herrschende Gasdruck dazu, daß eventuell infolge des Transportes im Abführrohr 12 befindliche Probenflüssigkeit nach oben in den Extraktorraum 7 ausgedrückt wird, um so für die Extraktion zur Verfügung zu stehen.

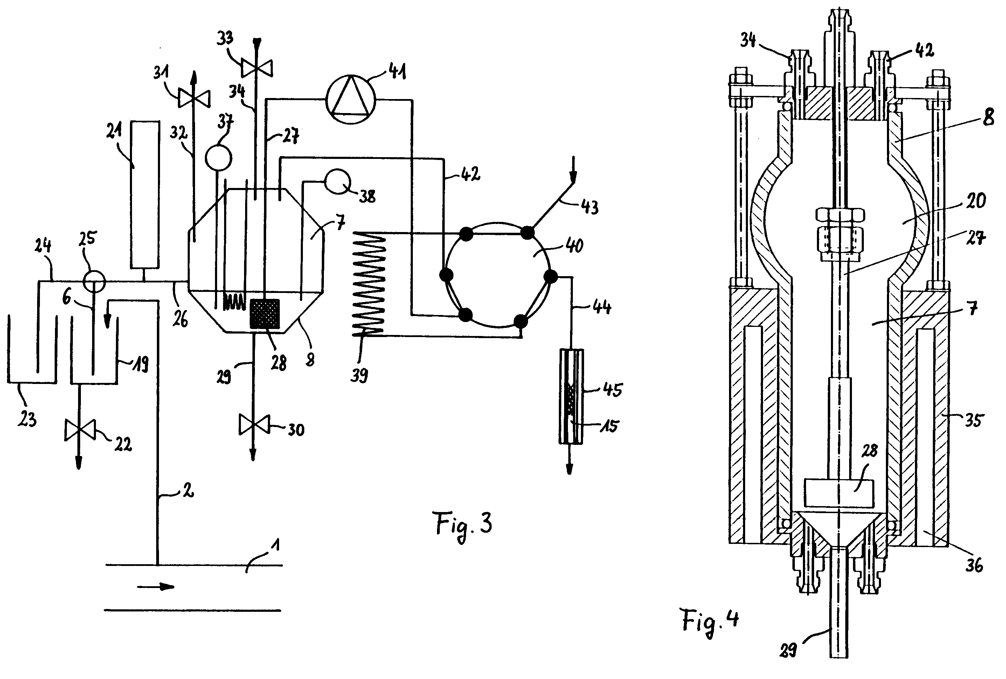

Bei der in den Fig. 3 und 4 schematisch dargestellten Vorrichtung wird die von dem Bypass 2 einem Hauptstrom entnommene Flüssigkeit dem Behälter 19 zugeführt, aus dem eine vorbestimmte Quantität der Flüssigkeit über die Leitung 6 mittels einer Dosiereinrichtung 21 entnommen wird, während der Rest über ein in dem Bypass 2 angeordnetes Ventil 22 in den Hauptstrom 1 zurückgeführt wird.

Außerdem ist ein Behälter 23 mit einer Standardlösung, ein Lösungsmittel (Wasser oder organisches Lösungsmittel) mit einer vorbestimmten, beispielsweise im ppm-Bereich liegenden Menge eines vom Analysator erfaßbaren und in der zu untersuchenden Probe nicht enthaltenen Stoffs, der zum internen oder externen Eichen bei einer quantitativen Analyse verwendet werden kann, vorgesehen. Dem Behälter 23 kann zum internen Eichen für jede zu untersuchende Probe mittels der Dosiereinrichtung 21 ebenfalls eine vorbestimmte Quantität über eine Leitung 24 durch entsprechendes Umschalten eines Umschaltventils 25 entnommen werden, über das die Behälter 19, 22 mit einem Zulauf 26 des Extraktorrohrs 8 verbunden sind. Der von dem im Lösungsmittel enthaltenen Stoff erzeugte Peak dient hierbei dann als Eichmaß. Ebenso kann extern geeicht werden, wenn etwa in regelmäßigen Abständen zwischen der Analyse von zu untersuchenden Proben nur die Standardlösung ohne Probe aus dem Behälter 23 analysiert wird.

Gegebenenfalls kann mit der Standardlösung auch eine gesättigte Salzlösung, etwa eine Kaliumcarbonat- oder Calciumchloridlösung, in einem vorbestimmten Mischungsverhältnis mit der Standardlösung zur Erhöhung des Dampfdrucks und damit zur Verbesserung der Extraktion bestimmter Stoffklassen beigegeben werden. Dabei wird das Salz entsprechend den in der Probe erwarteten Substanzen ausgewählt. Die Salzlösung kann hierbei die Standardlösung selbst bilden, indem der Standardstoff direkt der Salzlösung in vorbestimmter Menge zugegeben wird.

Das Extraktorrohr 8 enthält eine von oben in dieses eingeführte und bis zu seinem Bodenbereich reichende Leitung 27 zur Zuführung von Trägergas, wobei am Austrittsende der Leitung 27 eine Glasfritte 28 angeordnet ist, die zur Ausbildung von entsprechend kleinen Gasbläschen führt, die in der Probenflüssigkeit nach oben steigen. Die Größe der Gasbläschen hängt von der Wahl der Glasfritte 28 ab. Da unter Umständen die Probenflüssigkeit schäumen kann, ist das Extraktorrohr 8 im Bereich seines oberen Endes aufgeweitet, die um die Schaumblasen aufnehmen zu können.

Das Extraktorrohr 8 besitzt an seiner tiefsten Stelle einen unteren Ablauf 29 mit einem Ventil 30, sowie am oberen Ende einen Anschluß für eine mit einem Ventil 31 versehene Entlüftungsleitung 32 sowie einen Anschluß für eine mit einem Ventil 33 versehene Spülleitung 34, über die Spülflüssigkeit in das Extraktorrohr 8 eingeführt, vorzugweise eingesprüht werden kann, die dann durch den Ablauf 29 abgeführt wird.

Das Extraktorrohr 8 ist in einem Gehäuse 35 angeordnet, das Ausnehmungen 36 für die Heizung 13 bildende Heizpatronen, die über einen Temperaturfühler 37 gesteuert werden, aufweist. Außerdem ist ein Füllstandsfühler 38 im Extraktorrohr 8 vorgesehen.

Zusätzlich ist eine Dosierschleife 39, etwa ein Edelstahlrohr, vorgesehen, die ein bestimmtes Volumen aufweist. Über ein sogenanntes Six-Port-Ventil 40, bei dem in einer ersten Stellung jeweils drei Paare von zwei benachbarte Anschlüssen und in der zweiten, um 60° verdrehten Stellung die drei anderen Paare von jeweils zwei benachbarten Anschlüssen verbunden sind, ist die Dosierschleife 39 mit einer an die Leitung 27 angeschlossenen Pumpe 41 sowie über eine Abführleitung 42 mit dem Inneren des Extraktorrohrs 8 verbindbar. In dieser Stellung (Extrahierzustand) wird das im Extraktorrohr 8, in den Leitungen 27, 42 und in der Dosierschleife 39 befindliche Trägergas mittels der Pumpe 41 umgepumpt und hierdurch durch die Probenflüssigkeit geleitet. Auf diese Weise wird das Trägergas mit zu untersuchenden Substanzen angereichert.

Durch anschließendes Umschalten des Ventils 40 in die in Fig. 3 dargestellte Position (Dosierzustand) wird die Pumpe 41 kurzgeschlossen und die Dosierschleife 39 auf der einen Seite mit einer Leitung 43 für inertes Trägergas, etwa Helium oder Stickstoff, und auf der anderen Seite - gegebenenfalls über eine beheizte Transferleitung 44 zur Vermeidung von Kondensationen - mit einer das kühlbare und im gekühlten Zustand als Falle dienende sowie schnell und gesteuert aufheizbare Verdampferrohr 15 aufweisenden, im Extrahierzustand mit der Leitung 43 kurzgeschlossenen Aufgabeeinrichtung 45 für einen Gaschromatographen verbunden. Die über die Dosierschleife 39 in das gekühlte Verdampferrohr 15 eingeführten Substanzen werden dort zunächst gefangen und später durch entsprechendes Aufheizen freigesetzt.

Spülflüssigkeit kann bei dieser Anordnung nicht nur durch das Extraktorrrohr 8, sondern auch durch die Pumpe 41 und die Dosierschleife 39 geführt werden, wobei das Ventil 31 der Belüftungsleitung 32 geöffnet ist.

## Patentansprüche

1. Verfahren zum qualitativen und/oder quantitativen Untersuchen von Ausgangsmaterial, bestehend aus einer flüssigen Phase, in der die zu untersuchenden Substanzen enthalten sind, wobei eine definierte Menge an Ausgangsmaterial in einen in vertikaler Richtung langgestreckten, engen Extraktorraum (7) gefördert wird, wobei man in einer ersten Stufe ein Trägergas von unten durch das im Extraktorraum (7) befindliche, flüssige Ausgangsmaterial perlen läßt und das mit den zu untersuchenden Substanzen beladene Trägergas in ein kühl- und heizbares Verdampferrohr (15) führt, dessen Temperatur derart eingestellt ist, daß die zu untersuchenden Substanzen an einer darin befindlichen Phase festgehalten werden, während das Trägergas über eine vor einer gaschromatographischen Kapillarsäule (17) stromabwärts vom Verdampferrohr abzweigende Abführleitung (18) abgeführt wird, wonach in einer zweiten Stufe die im Verdampferrohr (15) zurückgehaltenen Substanzen durch Erhitzen des Verdampferrohrs (15) bei freigegebenem Zugang zur Kapillarsäule (17) bzw. zu einem Analysator freigesetzt und mittels Trägergas in die Kapillarsäule (17) bzw. den Analysator geführt werden, dadurch **gekennzeichnet**, daß man in der ersten Stufe die im Extraktorraum verdampfte, flüssige Phase des Ausgangsmaterials mit in das Verdampferrohr, dessen Temperatur derart eingestellt ist, daß die mitgeführte verdampfte, flüssige Phase des Ausgangsmaterials zumindest überwiegend nicht festgehalten wird, führt und zumindest überwiegend zusammen mit dem Trägergas unter Blockierung des Zugangs zur Kapillarsäule (17) bzw. zum Analysator mittels zusätzlicher Trägergaseinleitung stromabwärts von der abzweigenden Abführleitung abführt.

2. Verfahren nach Anspruch 1, dadurch gekennzeichnet, daß der Extraktorraum beheizt wird.

3. Verfahren nach Anspruch 2, dadurch gekennzeichnet, daß das in den Extraktorraum geförderte Ausgangsmaterial insgesamt verdampft wird.

4. Verfahren nach Anspruch 1 oder 2, dadurch gekennzeichnet, daß das Ausgangsmaterial mittels Trägergas in den Extraktorraum befördert wird.

5. Verfahren nach einem der Ansprüche 1 bis 4, dadurch gekennzeichnet, daß das Ausgangsmaterial aus einem Hauptstrom entnommen wird.

6. Verfahren nach Anspruch 5, dadurch gekennzeichnet, daß das Ausgangsmaterial aus einem Bypass eines Hauptstroms entnommen wird.

7. Verfahren nach einem der Ansprüche 1 bis 4, dadurch gekennzeichnet, daß das Ausgangsmaterial einem Probenbehälter entnommen wird.

8. Verfahren nach einem der Ansprüche 1 bis 7, dadurch gekennzeichnet,daß das Ausgangsmaterial zusammen mit einer vorbestimmten Menge einer Standardlösung in den Extraktorraum gefördert wird.

9. Verfahren nach einem der Ansprüche 1 bis 8, dadurch gekennzeichnet, daß das Ausgangsmaterial mit einer vorgebenen Menge einer den Dampfdruck erhöhenden Lösung versetzt wird.

10. Vorrichtung zum qualitativen und/oder quantitativen Untersuchen von Ausgangsmaterial, bestehend aus einer flüssigen Phase, in der die zu untersuchenden Substanzen enthalten sind, die von einem Trägergas aufgenommen und gegebenenfalls über eine gaschromatographische Kapillarsäule (17) einem Analysator zugeführt werden, bei der eine Einrichtung (4) zum Bereitstellen einer definierten Menge an Ausgangsmaterial, ein in vertikaler Richtung langgestreckter, enger an eine Trägergasquelle anschließbarer Extraktorraum (7) mit einer mit seinem oberen Ende verbundenen Abführleitung (12) für beladenes Trägergas, ein kühl- und heizbares Verdampferrohr (15), mit dem die Abführleitung (12) und eine Spülgasleitung eintrittsseitig verbunden sind und ein Fraktionenvorverteiler (16) vorgesehen sind, der Fraktionenvorverteiler (16) mit dem Austrittsende des Verdampferrohrs (15) und mit der Kapillarsäule (17) bzw. dem Analysator verbunden, sowie mit einer verschließbaren Abführleitung (18) für mit Lösungsmittel beladenem Trägergas versehen ist, dadurch gekennzeichnet, daß die vom Extraktorraum (7) ausgehende Abführleitung (12) für beladenes Trägergas direkt mit dem Verdampferrohr (15) verbunden ist und stromabwärts der verschließbaren Abführleitung (18) eine Zuführleitung des Fraktionenvorverteilers (16) für zusätzliches Trägergas zum pneumatischen Verschließen des Zugangs zur Kapillarsäule (17) bzw. zum Analysator vorgesehen ist.

11. Vorrichtung nach Anspruch 10, dadurch gekennzeichnet, daß die Einrichtung (4) eine mit einem Hauptstrom (1) gekoppelte Dosierschleife ist.

12. Vorrichtung nach Anspruch 10, dadurch gekennzeichnet, daß die Einrichtung (4) ein Behälter ist, der an eine Trägergasleitung (5) und eine zum Extraktorraum (7) führende Zuführleitung (6) angeschlossen ist.

13. Vorrichtung nach einem der Ansprüche 10 bis 12, dadurch gekennzeichnet, daß der Extraktorraum (7) in einem Extraktorrohr (8) ausgebildet ist.

14. Vorrichtung nach Anspruch 13, dadurch gekennzeichnet, daß der Extraktorraum (7) in einem, vorzugsweise erweiterten Kopfraum (20) mündet, der mit der Abführleitung (12) verbunden ist.

15. Vorrichtung nach Anspruch 14, dadurch gekennzeichnet, daß der Extraktorraum (7) die Abführleitung (12) ringförmig umgibt.

16. Vorrichtung nach einem der Ansprüche 10 bis 15, dadurch gekennzeichnet, daß die Abführleitung (12) mit dem Verdampferrohr (15) über ein Kupplungsstück (14) verbindbar ist.

17. Vorrichtung nach Anspruch 16, dadurch gekennzeichnet, daß das Kupplungsstück mit der Spülgasleitung verbunden ist.

18. Vorrichtung nach Anspruch 16 oder 17, dadurch gekennzeichnet, daß das Kupplungsstück (14) eine Schleuse bildet.

19. Vorrichtung nach einem der Ansprüche 10 bis 18, dadurch gekennzeichnet, daß dem Verdampferrohr (15) eine Dosierschleife (39) vorgeschaltet ist, die einerseits in Kurzschluß mit dem Extraktorraum (7) schaltbar und andererseits mit einer Leitung (43) für inertes Trägergas und dem Verdampferrohr (15) verbindbar ist.

20. Vorrichtung nach einem der Ansprüche 10 bis 19, dadurch gekennzeichnet, daß eine Glasfritte (28) zum Erzeugen von Trägergasbläschen im Extraktorraum (7) vorgesehen ist.

21. Vorrichtung nach einem der Ansprüche 10 bis 20, dadurch gekennzeichnet, daß das Extraktorrohr (8) als Probenaufnahmebehälter mit einer Injektionsnadel versehen auswechselbar auf einem Kupplungsstück (14) zum Verbinden mit dem Verdampferrohr aufsetzbar ist.

## Claims

1. Method for the qualitative and/or quantitative investigation of starting material consisting of a liquid phase which contains the substances to be investigated, wherein a defined amount of starting material is conveyed into a narrow extractor chamber (7) which is elongate in the vertical direction, wherein in a first stage a carrier gas is allowed to bubble from the bottom through the liquid starting material which is present in the extractor chamber (7), and the carrier gas which is loaded with the substances to be investigated passes into a coolable and heatable vaporizer tube (15) whose temperature is adjusted so that the substances to be investigated are retained on a phase present therein, while the carrier gas passes out through a discharge line (18) which branches off upstream of a gas-chromatography capillary column (17) and downstream of the vaporizer tube, after which in a second stage the substances retained in the vaporizer tube (15) are released by heating the vaporizer tube (15) with free access to the capillary column (17) and to an analyser and are passed by means of carrier gas into the capillary column (17) and the analyser, characterized in that in the first stage the liquid phase, which has been vaporized in the extractor chamber, of the starting material is carried into the vaporizer tube whose temperature is adjusted so that the carried, vaporized, liquid phase of the starting material is at least predominantly not retained, and passes out at least predominantly together with the carrier gas, with blocking of the access to the capillary column (17) and to the analyser, by means of additional carrier gas introduction downstream of the discharge line which branches off.

2. Process according to Claim 1, characterized in that the extractor chamber is heated.

3. Process according to Claim 2, characterized in that the starting material conveyed into the extractor chamber is completely vaporized.

4. Process according to Claim 1 or 2, characterized in that the starting material is conveyed by means of carrier gas into the extractor chamber.

5. Process according to any of Claims 1 to 4, characterized in that the starting material is taken from a main stream.

6. Process according to Claim 5, characterized in that the starting material is taken from a bypass of a main stream.

7. Process according to any of Claims 1 to 4, characterized in that the starting material is taken from a sample container.

8. Process according to any of Claims 1 to 7, characterized in that the starting material is conveyed together with a predetermined amount of a standard solution into the extractor chamber.

9. Process according to any of Claims 1 to 8, characterized in that the starting material is mixed with a preset amount of a solution which increases the vapour pressure.

10. Apparatus for the qualitative and/or quantitative investigation of starting material consisting of a liquid phase which contains the substances to be investigated which are taken up by a carrier gas and, where appropriate, passed via a gas-chromatography capillary column (17) into an analyser, in which there are provided a device (4) for providing a defined amount of starting material, a narrow extractor chamber (7) which is elongate in the vertical direction and can be connected to a carrier gas source and has a discharge line (12) which is connected to its upper end for loaded carrier gas, a coolable and heatable vaporizer tube (15) to whose entry end are connected the discharge line (12) and a flushing gas line, and a preliminary fraction distributor (16), the preliminary fraction distributor (16) is connected to the outlet end of the vaporizer tube (15) and to the capillary column (17) and the analyser and is provided with a closeable discharge line (18) for carrier gas loaded with solvent, characterized in that the discharge line (12), which leaves the extractor chamber (7), for loaded carrier gas is directly connected to the vaporizer tube (15), and a supply line of the preliminary fraction distributor (16) is provided downstream of the closeable discharge line (18) for additional carrier gas for pneumatic closure of the access to the capillary column (17) and to the analyser.

11. Apparatus according to Claim 10, characterized in that the device (4) is a metering loop coupled to a main stream (1).

12. Apparatus according to Claim 10, characterized in that the device (4) is a container which is connected to a carrier gas line (5) and to a supply line (6) leading to the extractor chamber (7).

13. Apparatus according to any of Claims 10 to 12, characterized in that the extractor chamber (7) is formed in an extractor tube (8).

14. Apparatus according to Claim 13, characterized in that the extractor chamber (7) opens into a preferably widened headspace (20) which is connected to the discharge line (12).

15. Apparatus according to Claim 14, characterized in that the extractor chamber (7) surrounds in an annular fashion the discharge line (12).

16. Apparatus according to any of Claims 10 to 15, characterized in that the discharge line (12) can be connected to the vaporizer tube (15) via a coupling piece (14).

17. Apparatus according to Claim 16, characterized in that the coupling piece is connected to the flushing gas line.

18. Apparatus according to Claim 16 or 17, characterized in that the coupling piece (14) forms a lock.

19. Apparatus according to any of Claims 10 to 18, characterized in that a metering loop (39) is upstream of the vaporizer tube (15) and, on the one hand, can be connected in short-circuit to the extractor chamber (7) and, on the other hand, can be connected to a line (43) for inert carrier gas and to the vaporizer tube (15).

20. Apparatus according to any of Claims 10 to 19, characterized in that a glass frit (28) is provided to generate carrier gas bubbles in the extractor chamber (7).

21. Apparatus according to any of Claims 10 to 20, characterized in that the extractor tube (8) provided as sample-receiving container with an injection needle can be exchangeably attached to a coupling piece (14) for connection to the vaporizer tube.

## Revendications

1. Procédé d'analyse qualitative et/ou quantitative de produits de départ formant une phase liquide dans laquelle les substances à analyser sont contenues, dans lequel une quantité définie de produits de départ est refoulée dans une chambre d'extraction étroite (7) disposée verticalement, et dans lequel, dans une première étape, on fait barboter un gaz porteur dans les produits de départ liquides se trouvant dans la chambre d'extraction (7) et on achemine le gaz porteur chargé des substances à analyser vers un tube d'évaporation (15) susceptible d'être refroidi et chauffé, dont la température peut être réglée de telle sorte que les substances à analyser soient retenues dans une phase fixe dans ledit tube d'évaporation, tandis que le gaz porteur est évacué par une conduite d'évacuation (18) bifurquant en aval du tube d'évaporation et en amont d'une colonne capillaire de chromatographie en phase gazeuse (17), après quoi, dans une seconde étape, par ouverture de l'accès vers la colonne capillaire (17) ou l'analyseur, les substances retenues dans le tube d'évaporation (15) sont libérées par l'échauffement dudit tube d'évaporation (15) et amenées, au moyen du gaz porteur, dans la colonne capillaire (17) ou l'analyseur, caractérisé en ce que, dans la première étape, on amène dans le tube d'évaporation la phase liquide des produits de départ évaporée dans la chambre d'extraction, la température dudit tube d'évaporation étant réglée de telle sorte que la phase liquide évaporée des produits de départ ne soit pas, au moins de façon prépondérante, retenue, et en ce qu'on évacue cette phase liquide, au moins de façon prépondérante, avec le gaz porteur, alors que l'accès à la colonne capillaire (17) ou à l'analyseur est bloqué au moyen d'une conduite d'amenée de gaz porteur supplémentaire disposée en aval de la conduite d'évacuation bifurquante.

2. Procédé selon la revendication 1, caractérisé en ce que la chambre d'extraction est chauffée.

3. Procédé selon la revendication 2, caractérisé en ce que les produits de départ refoulés dans la chambre d'extraction sont intégralement évaporés.

4. Procédé selon la revendication 1 ou 2, caractérisé en ce que les produits de départ sont envoyés dans la chambre d'extraction au moyen d'un gaz porteur.

5. Procédé selon l'une quelconque des revendications 1 à 4, caractérisé en ce que les produits de départ sont prélevés d'un courant principal.

6. Procédé selon la revendication 5, caractérisé en ce que les produits de départ sont prélevés par une dérivation d'un courant principal.

7. Procédé selon l'une des revendications 1 à 4, caractérisé en ce que les produits de départ sont prélevés d'un réservoir d'échantillons.

8. Procédé selon l'une des revendications 1 à 7, caractérisé en ce que les produits de départ sont envoyés dans la chambre d'extraction avec une quantité prédéterminée de solution de référence.

9. Procédé selon l'une des revendications 1 à 8, caractérisé en ce que les produits de départ sont mélangés avec une quantité prédéterminée d'une solution augmentant la pression de vapeur.

10. Dispositif d'analyse qualitative et/ou quantitative de produits de départ formant une phase liquide dans laquelle les substances à analyser sont contenues, lesquelles sont absorbées par un gaz porteur et sont amenées, éventuellement par une colonne capillaire de chromatographie en phase gazeuse (17), à un analyseur, dans lequel sont prévus un dispositif (4) de préparation d'une quantité définie de produits de départ, une chambre d'extraction (7) étroite, disposée verticalement et susceptible d'être reliée à une source de gaz porteur, munie d'une conduite d'évacuation (12) de gaz porteur chargé reliée à l'extrémité supérieure de ladite chambre, un tube d'évaporation (15) susceptible d'être refroidi et chauffé en amont duquel la conduite d'évacuation (12) et une conduite de gaz de lavage sont connectées, et un pré-séparateur de fractions (16), le pré-séparateur de fractions (16) étant connecté en aval du tube d'évaporation (15) et à la colonne capillaire (17) ou à l'analyseur, et également muni d'une conduite d'évacuation (18) du gaz porteur chargé de solvant, ladite conduite étant susceptible d'être fermée, caractérisé en ce que la conduite d'évacuation (12) pour le gaz porteur chargé et sortant de la chambre d'extraction (7) est directement reliée au tube d'évaporation (15) et en ce que, en aval de la conduite d'évacuation (18) susceptible d'être fermée, une conduite d'amenée du pré-séparateur de fractions (16) est prévue pour introduire du gaz porteur additionnel afin d'obturer pneumatiquement l'accès à la colonne capillaire (17) ou à l'analyseur.

11. Dispositif selon la revendication 10, caractérisé en ce que le dispositif (4) est une boucle de dosage reliée à un courant principal (1).

12. Dispositif selon la revendication 10, caractérisé en ce que le dispositif (4) est un réservoir, lequel est relié à une conduite de gaz porteur (5) et à une conduite d'amenée (6) menant à la chambre d'extraction (7).

13. Dispositif selon l'une des revendications 10 à 12, caractérisé en ce que la chambre d'extraction (7) est formée à l'intérieur d'un tuyau d'extraction (8).

14. Dispositif selon la revendication 13, caractérisé en ce que la chambre d'extraction (7) débouche dans une chambre de tête (20), de préférence élargie, laquelle est reliée à la conduite d'évacuation (12).

15. Dispositif selon la revendication 14, caractérisé en ce que la chambre d'extraction (7) entoure de manière annulaire la conduite d'évacuation (12).

16. Dispositif selon l'une des revendications 10 à 15, caractérisé en ce que la conduite d'évacuation (12) est susceptible d'être connectée au tube d'évaporation (15) au moyen d'un raccord (14).

17. Dispositif selon la revendication 16, caractérisé en ce que le raccord est connecté à la conduite de gaz de lavage.

18. Dispositif selon la revendication 16 ou 17, caractérisé en ce que le raccord (14) forme un sas.

19. Dispositif selon l'une des revendications 10 à 18, caractérisé en ce qu'une boucle de dosage (39) est reliée en amont du tube d'évaporation (15), laquelle boucle de dosage est susceptible d'être reliée, soit en circuit fermé avec la chambre d'extraction (7), soit avec une conduite (43) de gaz porteur inerte et le tube d'évaporation (15).

20. Dispositif selon l'une des revendications 10 à 19, caractérisé en ce qu'un bloc de verre fritté (28) est prévu dans la chambre d'extraction pour former des bulles de gaz porteur.

21. Dispositif selon l'une des revendications 10 à 20, caractérisé en ce que le tuyau d'extraction (8), lorsqu'il est utilisé comme réservoir d'alimentation en échantillons, est muni d'une aiguille d'injection, est amovible et est susceptible d'être accouplé à un raccord (14) en vue de sa connection avec le tube d'évaporation.
